# EUROPÄISCHE PATENTSCHRIFT

(11) **EP 2 338 616 B1**
(45) Veröffentlichungstag und Bekanntmachung des Hinweises auf die Patenterteilung: **14.09.2016**
(21) Anmeldenummer: 10193124.4
(22) Anmeldetag: 30.11.2010
(51) Int. Cl.: B08B 1/00, B08B 1/02, B08B 1/04, B08B 7/02, B23K 26/10, B23K 26/70

(54) **Maschineller Auflageleisten-Reiniger zum Reinigen von Auflageleisten von Werkstückauflagen an Werkzeugmaschinen**
Mechanical support strip cleaner for cleaning support strips of work piece supports on machine tools
Dispositif mécanique pour le nettoyage de barres d'appui de supports de pièces à usiner sur des machines-outils

(30) Priorität: 23.12.2009 DE 102009060137
(43) Veröffentlichungstag der Anmeldung: 29.06.2011
(73) Patentinhaber: Trumpf Grüsch AG, 7214 Grüsch (CH)
(72) Erfinder: Janutin, Andreas, 7000, Chur (CH); Dubler, Peter, 7138, Surcuolm (CH); Böhringer, Claus, 7206, Igis (CH)
(74) Vertreter: Kohler Schmid Möbus Patentanwälte

(56) Entgegenhaltungen:
- EP-A1- 2 082 813
- WO-A1-2004/043638
- WO-A1-2005/077552
- DE-A1- 4 427 910
- DE-A1-102004 060 085
- DE-U1-202004 015 922
- US-A- 3 641 618
- US-A- 5 482 562
- US-A- 6 033 522

## Beschreibung

Die Erfindung betrifft einen maschinellen Auflageleisten-Reiniger zum Reinigen von Auflageleisten von Werkstückauflagen an Werkzeugmaschinen, insbesondere an Werkzeugmaschinen zum thermischen Schneiden von Werkstücken,
- mit einem Reinigungsorganträger, an welchem wenigstens ein Reinigungsorgan vorgesehen ist und welchem bei der Reinigung einer Auflageleiste eine Seitenlängsfläche der Auflageleiste zugeordnet ist und
- mit einem Parallel-Antrieb, welcher bei der Reinigung der Auflageleiste, um mittels des Reinigungsorgans Ablagerungen von der Auflageleiste zu entfernen, das Reinigungsorgan und die Auflageleiste relativ zueinander in einer Bewegungsrichtung bewegt, die bei der Reinigung der Auflageleiste parallel zu der dem Reinigungsorganträger zugeordneten Seitenlängsfläche der Auflageleiste und dabei quer zu einer Achse verläuft, die sich bei der Reinigung der Auflageleiste längs der Längsachse der Auflageleiste erstreckt.

Wenn Werkstücke auf einer Werkzeugmaschine bearbeitet werden, lagern sie häufig auf einer Werkstückauflage. Insbesondere beim thermischen Schneiden von Werkstücken werden Werkstückauflagen verwendet, welche eine Vielzahl von parallel angeordneten Auflageleisten aufweisen. An ihren Oberseiten definieren die Auflageleisten eine Auflagefläche für das zu bearbeitende Werkstück, z. B. ein Blech. Meistens sind die Auflageleisten an ihrer Oberseite gezackt, so dass die Werkstücke punktuell auf den Spitzen der Zacken der Auflageleisten aufliegen können.

Beim Bearbeitungsprozess werden die Auflageleisten vor allem zwischen den Auflagezacken und an ihren Seitenlängsflächen im Bereich der Auflagezacken stark verschmutzt. Beispielsweise tropft beim Laserschneiden von Blechen geschmolzenes Metall und Schlacke von oben auf die Auflageleisten und bleibt dort teilweise haften. Von Zeit zu Zeit müssen die Auflageleisten von den festhaftenden Ablagerungen befreit werden.

WO 2004/043638 A1 offenbart einen Auflageleisten-Reiniger mit Reinigungseinheiten unterschiedlicher Bauart. Eine erste Ausführungsform der Reinigungseinheit ist gabelförmig und weist an einander zugewandten Seiten zweier Gabelzinken jeweils mehrere Reinigungszähne auf. Zum Reinigen einer Auflageleiste wird der Auflageleisten-Reiniger von oben auf die Auflageleiste aufgesetzt, so dass die Auflageleiste im Zwischenraum zwischen den Gabelzinken des Reinigungsorganträgers angeordnet ist. Ablagerungen an der Auflageleiste werden entfernt, indem der Reinigungsorganträger mittels eines Elektromotors entlang der Seitenlängsflächen der Auflageleiste wiederholt angehoben und abgesenkt wird. Außerdem wird der Auflageleisten-Reiniger von einem Bediener allmählich in Längsrichtung der Auflageleiste vorgeschoben. Als Alternative zu der gabelförmigen Reinigungseinheit sind zwei Reinigungsscheiben vorgesehen, die um eine gemeinsame Drehachse drehbar sind und die einen Zwischenraum ausbilden. An den einander zugewandten Scheibenflächen sind die Reinigungsscheiben mit Reinigungszähnen versehen. Eine zu reinigende Auflageleiste wird in den Zwischenraum zwischen den Reinigungsscheiben eingeführt. Ablagerungen an der Auflageleiste werden durch die um die gemeinsame Drehachse umlaufenden Reinigungsscheiben abgetragen. Dabei bewegen sich die Reinigungsschreiben mit den Reinigungszähnen parallel zu den Seitenlängsflächen der Auflageleiste. Die dritte Bauart der Reinigungseinheit macht von zwei Zapfenfräsern Gebrauch, von denen jeder einer der Seitenlängsflächen einer zu reinigenden Auflageleiste zugeordnet ist. Zum Reinigen der Auflageleiste rotieren die Zapfenfräser um Drehachsen, die parallel zu den Seitenlängsflächen der Auflageleiste verlaufen.

DE 10 2004 060 085 A1 betrifft eine Vorrichtung zum Reinigen von mit Schlacke behafteten Auflageleisten eines Werkstück-Auflagetisches. Zum Abtragen der Schlacke ist unter anderem eine als Schlagvorrichtung ausgebildete Bearbeitungseinheit vorgesehen. Die Schlagvorrichtung umfasst eine Schlageinheit mit einem Stößel und einem Amboss. Eine zu reinigende Auflageleiste wird über den Amboss geschoben und dabei von dem oszillierenden Stößel der Schlageinheit hämmernd beaufschlagt.

WO 2005/077552 A1 beschreibt einen Auflageleisten-Reiniger mit einer Reinigungseinheit, die auf unterschiedliche Art und Weise ausgeführt sein kann. Eine erste Ausführungsform der Reinigungseinheit ist gabelartig ausgebildet und nimmt eine zu reinigende Auflageleiste zwischen zwei Gabelschenkeln auf. Zum Reinigen der Auflageleiste werden die Gabelschenkel parallel zu den Seitenlängsflächen der Auflageleiste bewegt. Als Alternative zu den schwenkbeweglichen Reinigungsorganen werden stirnverzahnte Reinigungsscheiben sowie verzahnte Reinigungsketten offenbart. Jede der Reinigungsscheiben und jede der Reinigungsketten ist einer der Seitenlängsflächen einer zu reinigenden Auflageleiste zugeordnet. Sowohl die Reinigungsscheiben als auch die Reinigungsketten bewegen sich parallel zu der jeweils zugeordneten Seitenlängsfläche der Auflageleiste.

Aus DE 44 27 910 A1 ist eine Vorrichtung zum Entfernen einer Beschichtung von einem Gegenstand bekannt. Die Vorrichtung umfasst ein Hammerwerk mit einem Hammerkopf, der seinerseits mit Nadeln versehen ist. Aufgrund einer Schwenkbewegung des Hammerkopfes oder durch eine oszillierende Bewegung der Nadeln selbst wird ein zu reinigender Gegenstand mit den Nadeln beaufschlagt und dadurch eine auf den zu reinigenden Gegenstand aufgebrachte Beschichtung entfernt. Alternativ wird ein Fräswerkzeug an dem zu reinigenden Gegenstand in dessen axialer Richtung entlangbewegt. Dabei rotiert das Fräswerkzeug um eine Drehachse, die parallel zu der Achse des zu reinigenden Gegenstandes verläuft.

EP 2082813 A1 beschreibt einen Auflageleisten-Reiniger mit einem Reinigungsorganträger, an welchem wenigstens ein Reinigungsorgan vorgesehen ist und welchem bei der Reinigung einer Auflageleiste eine Seitenfläche der Auflageleiste zugeordnet ist. Ein Parallel-Antrieb, bewegt bei der Reinigung der Auflageleiste das Reinigungsorgan und die Auflageleiste relativ zueinander.

Die Erfindung hat sich zum Ziel gesetzt, einen Auflageleisten-Reiniger bereitzustellen, der sich durch eine gegenüber dem Stand der Technik verbesserte Reinigungswirkung auszeichnet.

Erfindungsgemäß wird die Aufgabe gelöst durch einen Auflageleisten-Reiniger mit den Merkmalen von Anspruch 1.

Im Sinne der Erfindung ist der Auflageleisten-Reiniger mit einem Quer-Antrieb versehen, welcher bei der Reinigung einer Auflageleiste den Reinigungsorganträger und die Auflageleiste relativ zueinander quer zu der dem Reinigungsorganträger zugeordneten Seitenlängsfläche der Auflageleiste periodisch aufeinander zu und voneinander weg bewegt.

Durch das sich wiederholende Annähern und Entfernen der Reinigungsorganträger und der Auflageleiste in Richtung quer zur Seitenlängsfläche ergibt sich eine intermittierende Beaufschlagung der Auflageleiste bzw. der Ablagerungen an der Auflageleiste mit dem Reinigungsorgan bzw. den Reinigungsorganen, die an dem Reinigungsorganträger vorgesehen sind. Bereits abgelöste Ablagerungen können, wenn die Reinigungsorgane (kurzzeitig) von der Auflageleiste bzw. den Ablagerungen an der Auflageleiste entfernt sind, abgeführt werden bzw. herabfallen. Auf diese Weise wird vermieden, dass bereits abgelöste Ablagerungen den Reinigungsprozess behindern.

Außerdem können, immer wenn der Reinigungsorganträger kurzzeitig von der Seitenlängsfläche relativ weit beabstandet ist, der Auflageleisten-Reiniger und die Auflageleiste auch im Falle sehr starker Verschmutzungen entlang der Längsachse ohne Blockieren relativ zueinander verschoben werden. Erfindungsgemäß ergibt sich ein Auflageleisten-Reiniger, welcher sich durch eine verbesserte Handhabung auszeichnet.

Aufgrund der Relativbewegung des Reinigungsorganträgers und der Auflageleiste in Querrichtung der Seitenlängsfläche werden die Ablagerungen durch die Reinigungsorgane an dem Reinigungsorganträger z. B. mahlend oder zerreibend beaufschlagt. Die Reinigungs-Querbewegung ergänzt folglich die Reinigungs-Parallelbewegung, die mittels des Parallel-Antriebs erzeugt werden kann.

Im Allgemeinen ist es denkbar, dass der Parallel-Antrieb und/oder der Quer-Antrieb den Reinigungsorganträger bzw. das Reinigungsorgan und die Auflageleiste nicht nur mit der jeweils genannten Bewegungskomponente relativ zueinander bewegen können, sondern eine Relativbewegung auch in andere Bewegungsrichtungen erzeugen.

Bevorzugte Ausführungsarten der Erfindung nach Anspruch 1 ergeben sich aus den Ansprüchen 2 bis 15.

Insbesondere wenn der Reinigungsorganträger walzenartig ausgebildet ist, kann der Parallelantrieb beispielsweise als Drehantrieb ausgebildet sein, wobei der walzenartige Reinigungsorganträger um eine Drehachse gedreht werden kann, welche z. B. parallel zur Längsachse der Auflageleiste verläuft.

Vorzugsweise bewegt der Parallel-Antrieb den Reinigungsorganträger und die Auflageleiste mit einer periodischen Hubbewegung relativ zueinander. Die sich auf diese Weise ergebende Parallel-Hubbewegung zwischen Reinigungsorganträger und Auflageleiste zeichnet sich durch eine besonders gute Reinigungswirkung aus. Durch die quer zur Längsachse der Auflageleiste gerichtete Hubbewegung können die Ablagerungen mittels der Reinigungsorgane an dem Reinigungsorganträger nach oben bzw. nach unten von der Auflageleiste abgestreift, insbesondere abgeschabt werden.

Eine besonders wirkungsvolle Reinigung der Auflageleiste ergibt sich, indem der Reinigungsorganträger und die Auflageleiste derart relativ zueinander bewegt werden, dass die Bewegungsanteile, welche dem Parallel-Antrieb zugeordnet sind, und die Bewegungsanteile, welche dem Quer-Antrieb zugeordnet sind, miteinander überlagern können. Insbesondere werden auf diese Weise die Ablagerungen von der Auflageleiste mahlend und schabend entfernt.

Vorzugsweise können die durch die Antriebe erzeugten Bewegungsanteile derart überlagert werden, dass sich der Reinigungsorganträger und die Auflageleiste relativ zueinander entlang einer geschlossenen Bewegungsbahn bewegen. Auf diese Weise ist es möglich, dass der Reinigungsorganträger und die Auflageleiste wiederholt und kontinuierlich in einer Umlaufrichtung auf der geschlossenen Bewegungsbahn relativ zueinander bewegt werden. Eine Bewegungsumkehr, welche mit Brems- und Beschleunigungsvorgängen verbunden ist, kann somit vermieden werden. Dadurch ergibt sich ein ruhiger und gleichmäßiger Betrieb des Auflageleisten-Reinigers.

Eine besonders kompakte und kostengünstige Bauart der Erfindung ergibt sich, wenn der Parallel-Antrieb und der Quer-Antrieb einen gemeinsamen Antriebsmotor aufweisen, d. h. sowohl die Parallel-Bewegung als auch die Quer-Bewegung werden mittels eines einzigen Antriebsmotors erzeugt, indem der Antriebsstrang ein entsprechendes Getriebe aufweist. In diesem Fall können der Quer-Antrieb und der Parallel-Antrieb baulich von ein und derselben Antriebseinheit gebildet sein.

Bei einer kostengünstigen und robusten Bauart der Erfindung weist das Getriebe eine Steuerungsscheibe auf. Vorzugsweise ist die Steuerungsscheibe als Exzenter ausgebildet, d. h. ist das Getriebe als Exzenter-Getriebe ausgebildet.

Bei einer bevorzugten Variante der Erfindung bewegen die Antriebe den Reinigungsorganträger relativ zu der Auflageleiste. Aufgrund der in der Regel kleineren Masse des Reinigungsorganträgers im Vergleich zu der Masse der Auflageleiste ergibt sich bei gleicher Antriebsleistung des bzw. der Antriebsmotoren eine höhere Dynamik.

Im Falle einer besonders bevorzugten Erfindungsbauart kann der Auflageleisten-Reiniger flexibel an Auflageleisten mit unterschiedlicher Dicke bzw. mit unterschiedlich weit aufbauenden Ablagerungen eingesetzt werden. Auch kann der Auflageleisten-Reiniger flexibel und automatisch auf Schwankungen der Auflageleistendicke entlang der Längsachse der Auflageleiste reagieren, die sich insbesondere durch Hindernisse, wie z. B. nicht-ablösbare Ablagerungen, ergeben können.

Zu diesem Zweck ist eine kraftgesteuerte Hubbegrenzungseinrichtung vorgesehen, mittels derer bei Überschreiten einer maximalen Beaufschlagungskraft quer zur Seitenlängsfläche der Reinigungsorganträger nicht weiter an die Seitenlängsfläche angenähert werden kann. Vorteilhafterweise stoppt der Quer-Antrieb beim Überschreiten der Maximalkraft, d. h. im Überlastfall, seine periodische Bewegung nicht vollständig ab, sondern werden der Reinigungsorganträger und die Auflageleiste trotzdem wieder voneinander weg bewegt. Hierzu kann der Antrieb z. B. mit einer Reibkupplung versehen sein. Vorzugsweise weist die Hubbegrenzungseinrichtung aber ein im Überlastfall verformbares Federelement auf.

Indem der Reinigungsorganträger und die Auflageleiste auch im Überlastfall weiterhin periodisch in ihrer Relativstellung mit maximalem Abstand voneinander weg bewegt werden, können viele Hindernisse an der Auflageleiste ohne Blockieren passiert werden.

Es ist auch denkbar, dass der Reinigungsorganträger derart ausgebildet ist, z.B. gabelförmig, dass er zugleich beiden Seitenlängsflächen zuordenbar ist. Vorzugsweise weist ein Auflageleisten-Reiniger aber zwei Reinigungsorganträger auf, zwischen denen die Auflageleiste zum Entfernen der Ablagerungen angeordnet wird. Auf diese Weise können beide Seitenlängsflächen der Auflageleiste in einem Arbeitsgang besonders wirksam gereinigt werden.

Durch einen ruhigen und gleichmäßigen Betrieb zeichnet sich eine Erfindungsbauart aus, bei welcher die beiden Reinigungsorganträger bei der Reinigung einer Auflageleiste synchron aufeinander zu und voneinander weg bewegt werden, so dass sich die Reinigungsorganträger synchron auf die ihnen jeweils zugeordnete Seitenlängsfläche der Auflageleiste zu und von dieser weg bewegen. Die aufgrund der Beaufschlagung der Seitenlängsflächen bzw. der Ablagerungen an den Seitenlängsflächen entstehenden Querkräfte werden durch die synchrone Beaufschlagung der Reinigungsorganträger gegenseitig weitgehend aufgehoben, so dass sich die Querkräfte nicht oder nur in geringem Umfang z. B. auf Vorschubmittel des Auflageleisten-Reinigers auswirken.

Eine kompakte Bauart der Erfindung ergibt sich, indem ein gemeinsamer Quer-Antrieb und/oder ein gemeinsamer Parallel-Antrieb die Reinigungsorganträger relativ zu der Auflageleiste bewegen.

In der Praxis bewährt hat sich eine Ausführungsart, bei welcher als Reinigungsorgan ein Reinigungszahn vorgesehen ist. In der Regel sind an einem Reinigungsorganträger mehrere Reinigungsorgane vorgesehen, welche vorteilhafterweise als Reinigungszähne ausgebildet sind. Zu diesem Zweck kann der Reinigungsorganträger an seiner der Auflageleiste zugewandten Seite z.B. mit einer Verzahnung versehen sein.

Vorzugsweise ist die Schneidkante eines Reinigungszahns bzw. sind die Schneidkanten der Reinigungszähne bogenförmig ausgebildet. Die bogenförmige Ausbildung der Schneidkanten reduziert die Gefahr eines Blockierens der Vorschubbewegung, wenn die Reinigungsorgane in Vorschubrichtung auf ein Hindernis treffen.

Durch eine besonders gute Reinigungswirkung und zugleich eine kompakte Bauweise zeichnet sich eine Erfindungsvariante aus, bei welcher an ein und demselben Reinigungsorganträger Grobreinigungsorgane, beispielsweise Reinigungszähne, und Feinreinigungsorgane, beispielsweise Borsten, vorgesehen sind.

Im Falle eines besonders bevorzugten Ausführungsbeispiels sind die Feinreinigungsorgane zumindest abschnittsweise entlang der Längsachse der Auflageleiste zwischen Grobreinigungsorganen angeordnet. Der Auflageleisten-Reiniger und die Auflageleisten können bei gleicher Reinigungswirkung in beiden Richtungen entlang der Längsachse der Auflageleiste relativ zueinander verschoben werden.

Ein flexibel an die jeweilige Reinigungsaufgabe anpassbarer Auflageleisten-Reiniger ergibt sich, indem an zumindest einem

Reinigungsorganträger ein auswechselbarer Reinigungsorgan-Einsatz vorgesehen ist. Außerdem ist ein auswechselbarer Reinigungsorgan-Einsatz, z. B. ein auswechselbarer Bürsteneinsatz, hinsichtlich eines vorzeitigen Verschleißes von Reinigungsorganen vorteilhaft.

Bevorzugte Ausführungsbeispiele der Erfindung sind in den Zeichnungen schematisch gezeigt und werden anhand der Figuren näher erläutert. Es zeigen:
- **Figur 1:**: einen maschinellen Auflageleisten-Reiniger und eine zu reinigende Auflageleiste in einer perspektivischen Darstellung;
- **Figur 2:**: den maschinellen Auflagenleisten-Reiniger und die Auflageleiste aus Figur 1 in einer Vorderansicht;
- **Figur 3:**: eine Explosionsdarstellung des AuflageleistenReinigers aus Figur 1;
- **Figuren 4 bis 10:**: Vorderansichten von weiteren Varianten eines Auflageleisten-Reinigers und
- **Figuren 11 und 12:**: eine alternative Bauart eines Reinigungsorganträgers.

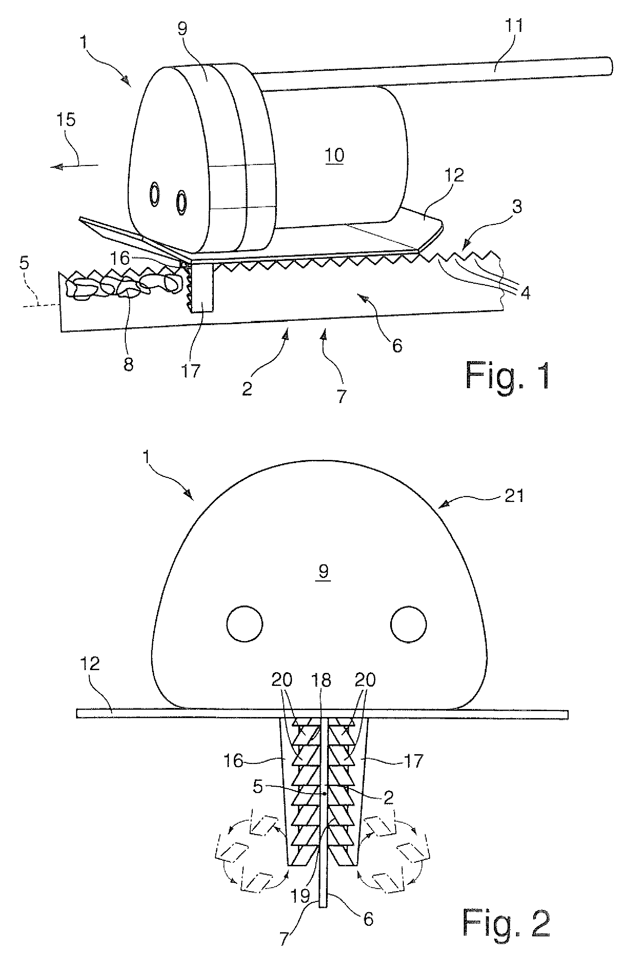

Figur 1 zeigt einen maschinellen Auflageleisten-Reiniger 1, welcher an einer zu reinigenden Auflageleiste 2 angeordnet ist. Bei der Auflageleiste 2 handelt es sich um eine übliche Auflageleiste von Werkstückauflagen an Laserschneidmaschinen. An ihrer Oberseite 3 ist die Auflageleiste 2 mit Zacken 4 versehen, auf deren Spitzen die Werkstücke punktuell aufgelegt werden. In der Regel werden Auflageleisten 2 aus Baustahl hergestellt.

In Figur 1 ist aus Gründen der Übersichtlichkeit nur eine einzelne Auflageleiste 2 gezeigt. Quer zur Längsachse 5 der Auflageleiste 2 sind weitere, parallel beabstandete Auflageleisten 2 (nicht gezeigt) vorgesehen, welche zusammen eine ebene Auflagefläche für ein Werkstück definieren. Vorteilhafterweise ist der Auflageleisten-Reiniger 1 so ausgestaltet, dass die Auflageleiste 2 zum Reinigen nicht abmontiert werden muss. Es ist aber auch denkbar, dass der Auflageleisten-Reiniger 1 als stationäre Reinigungsvorrichtung ausgebildet ist, welcher zum Reinigen abmontierte Auflageleisten 2 zugeführt werden.

Im oberen Bereich der Seitenlängsflächen 6 und 7 der gezeigten Auflageleiste 2 haften Ablagerungen 8, wie geschmolzenes Metall oder Schlacke, wobei in dem in Figur 1 rechts angeordneten Längsabschnitt der Auflageleiste 2 die Ablagerungen 8 bereits mittels des Auflageleisten-Reinigers 1 entfernt wurden.

Gemäß Figur 1 umfasst der Auflageleisten-Reiniger 1 ein Gehäuse 9, einen Antriebsmotor 10, eine Handhabe 11 sowie eine plattenartige Führungsanlage 12. Mittels der Führungsanlage 12 kann der Auflageleisten-Reiniger 1 quer zur Längsachse 5 der Auflageleiste 2 in einer definierten Stellung an die Auflageleiste 2 angelegt werden bzw. auf die Auflageleiste 2 aufgesetzt werden. Die Breite der Führungsanlage 12 ist ausreichend, damit sie gleichzeitig auf mehreren Auflageleisten 2 stabil aufliegen kann.

Die Handhabe 11 kann mit einem nicht gezeigten Handgriff versehen sein und dient dazu, den Auflageleisten-Reiniger 1 entlang der Auflageleiste 2 manuell in einer Vorschubrichtung 15 zu verschieben. Alternativ oder ergänzend zur Handhabe 11 kann auch ein motorischer Vorschubantrieb vorgesehen sein.

Des Weiteren weist der Auflageleisten-Reiniger 1 zwei Reinigungsorganträger 16 und 17 auf, welche durch die Führungsanlage 12 nach unten ragen. Aus der in Figur 2 gezeigten Vorderansicht ist ersichtlich, dass die Reinigungsorganträger 16 und 17 an ihren einander zugewandten Seiten 18 und 19 mehrere als Schneidzähne 20 ausgebildete Reinigungsorgane aufweisen. Die Auflageleiste 2 ist zwischen den Reinigungsorganträgern 16, 17 angeordnet. Die Reinigungsorganträger 16, 17 sind daher jeweils einer Seitenlängsfläche 6, 7 der Auflageleiste 2 zugeordnet.

Die Reinigungsorganträger 16, 17 sind mittels eines im Gehäuse 9 des Auflageleisten-Reinigers 1 angeordneten Antriebs 21 relativ zu der Auflageleiste 2 bewegbar. Gemäß Figur 2 sind die Reinigungsorganträger 16, 17 jeweils in ihrer auflageleistennahen Stellung dargestellt (durchgezogene Linien). In dieser Stellung ist der Abstand zwischen den Reinigungsorganträgern 16, 17 und auch den Reinigungszähnen 20 am kleinsten. Insbesondere berühren die Reinigungszähne 20 die ihnen zugeordnete Seitenlängsfläche 6, 7 der Auflageleiste 2.

Des Weiteren sind in Figur 2 jeweils drei weitere Stellungen der Reinigungsorganträger 16, 17 relativ zu der Auflageleiste 2 angedeutet, in welche sie mittels des Antriebs 21 überführt werden können. Die Pfeile zwischen den verschiedenen Positionen deuten die Bewegungsrichtung der Reinigungsorganträger 16, 17 an. Demnach werden die Reinigungsorganträger 16, 17 spiegelbildlich und mit entgegengesetzten Umlaufrichtungen entlang ansonsten identischer, geschlossener Bewegungsbahnen bewegt. Die Bewegungsbahnen verlaufen in einer Ebene, welche senkrecht zur Längsachse 5 (in Figur 2 senkrecht zur Zeichenebene) der Auflageleiste 2 verläuft.

Die Relativbewegungen der Reinigungsorganträger 16, 17 und der darauf angeordneten Reinigungszähne 20 gegenüber der Auflageleiste 2 weisen jeweils eine Bewegungskomponente auf, welche parallel zu der dem Reinigungsorganträger 16, 17 zugeordneten Seitenlängsfläche 6, 7 und dabei quer zur Längsachse 5 der Auflageleiste 2 verläuft. Insofern dient der Antrieb 21 des Aufilageleisten-Reinigers 1 als Parallel-Antrieb.

Außerdem umfassen die Antriebs-Relativbewegungen von Reinigungsorganträgern 16, 17 und Auflageleiste 2 eine mit der genannten parallelen Bewegungskomponente überlagerte Bewegungskomponente, welche quer zur jeweils zugeordneten Seitenlängsfläche 6, 7 der Auflageleiste 2 verläuft. Der Antrieb 21 dient folglich auch als Quer-Antrieb, mittels dessen die Reinigungsorganträger 16, 17 und die Auflageleiste 2 relativ zueinander quer zur jeweils zugeordneten Seitenlängsfläche 6, 7 der Auflageleiste 2 aufeinander zu und voneinander weg bewegbar sind.

Insbesondere können die Reinigungsorganträger 16, 17 relativ zu der Auflageleiste 2 kontinuierlich und wiederholt entlang der dargestellten geschlossenen Bewegungsbahnen bewegt werden, so dass sich periodische Relativbewegungen von Reinigungsorganträgern 16, 17 und Auflageleiste 2 ergeben. Durch diese Relativbewegungen werden die Reinigungsorganträger 16, 17 synchron aufeinander zu und voneinander weg bewegt, wodurch die Reinigungsorganträger 16, 17 zugleich synchron auf die ihnen jeweils zugeordnete Seitenlängsfläche 6, 7 der Auflageleiste 2 zu und von dieser weg bewegt werden.

Die Reinigungszähne 20 werden dabei gemeinschaftlich zunächst auf die jeweils zugeordnete Seitenlängsfläche 6, 7 zu bewegt sowie gleichzeitig parallel zu der Seitenlängsfläche 6, 7 in Figur 2 nach oben bewegt. Durch die Annährungsbewegung werden die Ablagerungen 8 (in Figur 2 nicht gezeigt) an der Auflageleiste 2 durch die Reinigungszähne 20 mahlend beaufschlagt, während aufgrund der nach oben gerichteten Bewegungskomponente die Ablagerungen 8 zugleich von der Auflageleiste 2 abgeschabt werden.

Im Weiteren werden die Reinigungszähne 20 gemeinschaftlich von der jeweils zugeordneten Seitenlängsfläche 6, 7 weg bewegt, wobei sie zunächst weiter nach oben bewegt werden. Bereits abgelöste Ablagerungen 8 können nun nach unten fallen und stören somit den weiteren Reinigungsvorgang nicht. Schließlich werden die von der Auflageleiste 2 beabstandeten Reinigungszähne 20 wieder gemeinschaftlich nach unten geführt. Dieser Bewegungsablauf kann mit einer hohen Frequenz kontinuierlich wiederholt werden.

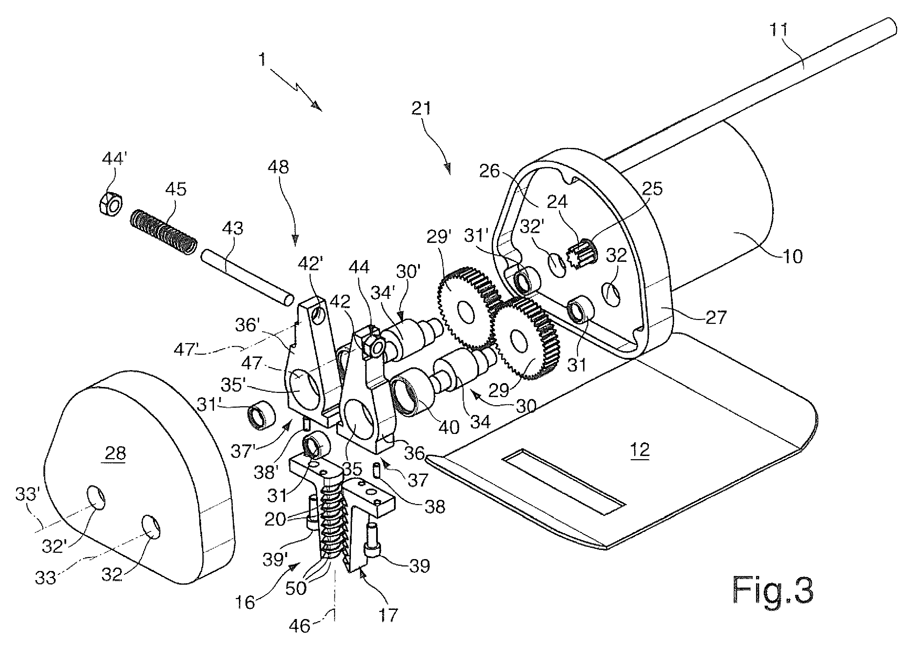

Figur 3 ist eine Explosionsdarstellung des Auflageleisten-Reinigers 1 zu entnehmen, aus welcher insbesondere Details des Antriebs 21 ersichtlich sind. Der Antrieb 21 dient für beide Reinigungsorganträger 16, 17 sowohl als Quer-Antrieb als auch als Parallel-Antrieb. Der Antrieb 21 weist zur Erzeugung der vorstehend beschriebenen Bewegungsabläufe als einzigen Antriebsmotor den Antriebsmotor 10 auf, welcher als Elektromotor ausgebildet ist.

Ein außenverzahntes Ende 24 der Motorwelle des Antriebsmotors 10 ragt durch eine Bohrung 25 in einer Seitenwand 26 des aus zwei Gehäusehälften 27, 28 bestehenden Gehäuses 9. Die Außenverzahnung des Motorwellenendes 24 greift in die Verzahnung eines Zahnrades 29, welches fest auf einer Antriebswelle 30 sitzt. Die Antriebswelle 30 ist an beiden Enden mittels Lagerhülsen 31 in Lagerbohrungen 32 an dem Gehäuse 9 um eine Drehachse 33 drehbar gelagert.

An der Antriebswelle 30 ist eine Steuerscheibe in Form eines Exzenters 34 vorgesehen. Der Exzenter 34 ist formschlüssig über eine zylindrische Lagerhülse 40 in einer zylindrischen Bohrung 35 einer Lagerplatte 36 drehgelagert. An der Unterseite 37 der Lagerplatte 36 ist der Reinigungsorganträger 17 mittels eines Steckbolzens 38 und einer Befestigungsschraube 39 befestigt.

Der Getriebestrang für den zweiten Reinigungsorganträger 16 ist spiegelbildlich aufgebaut, wobei das Zahnrad 29' nicht direkt mit der Motorwelle des Elektromotors im Eingriff steht. Vielmehr wird es über das Zahnrad 29 des ersten Getriebestranges angetrieben, wodurch sich eine erwünschte Umkehr der Drehrichtung ergibt.

Auf den von den Reinigungsorganträgern 16, 17 abgewandten Seiten sind die Lagerplatten 36, 36' mit jeweils einer Lagerbohrung 42, 42' versehen. Ein Führungsstab 43 ist in den Lagerbohrungen 42, 42' verschiebbar gelagert. An seinen Enden sind Anschlagschrauben 44, 44' aufgeschraubt, welche verhindern, dass der Führungsstab 43 aus den Lagerbohrungen 42, 42' an den Lagerplatten 36, 36' herausrutschen kann. Auf den Führungsstab 43 ist ein Federelement in Form einer Stabfeder 45 aufgesteckt, welches zwischen den beiden Lagerplatten 36, 36' angeordnet ist und über welches die Lagerplatten 36, 36' gegenseitig abgestützt sind.

Im Folgenden wird die Funktionsweise des Antriebes 21 im Einzelnen erläutert. Mittels des Elektromotors 10 wird das Zahnrad 29 mit einer in der Regel konstanten Drehzahl angetrieben, wodurch die Antriebswelle 30 um die Drehachse 33 rotieren. Zugleich rotiert das Zahnrad 29' und die Antriebwelle 30' des zweiten Getriebestranges in entgegengesetzter Richtung um die Drehachse 33'. Durch die Drehbewegungen der Antriebswellen 30, 30' drehen sich die Exzenter 34, 34' in den zylindrischen Bohrungen 35, 35' der Lagerplatten 36, 36'. Die Exzentrizität der Exzenter 34, 34' bewirkt eine Verschiebung der zylindrischen Bohrungen 35, 35' entlang einer Kreisbahn. Die Phasen der beiden Exzenter 34, 34' sind zueinander so eingestellt, dass sich die zylindrischen Bohrungen 35, 35' synchron aufeinander zu und voneinander weg bewegen. Außerdem bewegen sich die zylindrischen Bohrungen 35, 35' synchron auf und ab.

Aufgrund der kreisenden Verschiebung der zylindrischen Bohrungen 35, 35' werden die Lagerplatten 36, 36' entlang einer Parallelhubachse 46 periodisch angehoben und abgesenkt. Die Parallelhubachse 46 verläuft, wenn der Auflageleisten-Reiniger 1 auf eine Auflageleiste 2 mittels der Führungsanlage 12 definiert aufgesetzt ist, parallel zu den Seitenlängsflächen 6, 7 der Auflageleiste 2 und quer zur Längsachse 5 der Auflageleiste 2.

Die periodischen Hubbewegungen der Lagerplatten 36, 36' entlang der Paralielhubachse 46 bewirken entsprechende periodische Hubbewegungen der Reinigungsorganträger 16, 17 relativ zu der Auflageleiste 2. Der von dem Antrieb 21 gebildete Parallel-Antrieb des Auflageleisten-Reinigers 1 ist demnach als periodischer Hubantrieb ausbildet.

Zusätzlich werden die Parallel-Hubbewegungen durch periodische Schwenkbewegungen der Reinigungsorganträger 16, 17 überlagert. Die Schwenkbewegungen der Reinigungsorganträger 16, 17 ergeben sich durch die zwischen den Lagerplatten 36, 36' angeordnete Stabfeder 45.

Im Normalbetrieb verhindert die Stabfeder 45, dass sich die Lagerplatten 36, 36' im Bereich der Lagerbohrungen 42, 42' aufeinander zu bewegen können. Aufgrund der Abstandsfixierung im Bereich der Lagerbohrungen 42, 42' führen die Lagerplatten 36, 36' durch die Verschiebung der zylindrischen Bohrungen 35, 35' quer zur Parallelhubachse 46 Schwenkbewegungen aus. Die Schwenkachsen 47, 47' der Schwenkbewegungen verlaufen parallel zu den Drehachsen 33, 33' und schneiden die Lagerplatten 36, 36' im Bereich der Lagerbohrungen 42, 42'. Mit den Schwenkbewegungen der Lagerplatten 36, 36' gehen zwangsläufig Schwenkbewegungen der Reinigungsorganträger 16, 17 einher. Der von dem Antrieb 21 gebildete Quer-Antrieb ist demnach als periodischer Schwenkantrieb ausgebildet.

Die resultierenden Bewegungen der Reinigungsorganträger 16, 17 ergeben sich folglich aus einer Überlagerung von Parallel-Hubbewegungen entlang der Parallelhubachse 46 und Schwenkbewegungen um die Schwenkachsen 47, 47'.

Durch die gegenseitige Abstützung der Lagerplatten 36, 36' über die Stabfeder 45 weist der Auflageleisten-Reiniger 1 außerdem eine kraftgesteuerte Hubbegrenzungseinrichtung 48 auf. An der Stabfeder 45 liegt die jeweils von den Reinigungszähnen 20 auf die Auflageleiste 2 bzw. die Ablagerungen 8 ausgeübte Kraftkomponente an, welche quer zu den Seitenlängsflächen 6, 7 der Auflageleiste 2 gerichtet ist. Übersteigt diese Kraftkomponente die Federkraft der Stabfeder 45, insbesondere wenn die Reinigungszähne 20 bei ihrer Bewegung aufeinander zu vorzeitig auf die Auflageleiste 2 oder ein Hindernis treffen, wird die Stabfeder 45 zusammengedrückt. Durch die Komprimierung der Stabfeder 45 kann sich eine Ausgleichsbewegung der Lagerplatten 36, 36' ergeben, bei welcher sich die Lagerbohrungen 32, 32' annähern, gleichzeitig die Reinigungsorganträger 16, 17 und darauf angeordneten Reinigungszähne 20 aber nicht weiter aufeinander zu bewegt werden. Der Auflageleisten-Reiniger 1 kann auf diese Weise flexibel an Auflageleisten 2 mit unterschiedlichen Dicken eingesetzt werden.

Wenn die Reinigungsorganträger 16, 17 im Normalbetrieb quer zur Seitenlängsfiläche 6, 7 ihre aufilageleistennahen Endstellungen einnehmen, weisen die Reinigungsorganträger 16, 17 bzw. die auf ihnen angeordneten Reinigungszähne 20 den kleinsten Abstand relativ zueinander auf. Dieser kleinste Abstand ist vorteilhafterweise einstellbar, indem zumindest eine der Anschlagmuttern 44, 44' entlang des Stabes 43 in unterschiedliche Stellungen gedreht werden kann. Durch die Verstellung der Anschlagschrauben 44, 44' entlang des Stabes 45 ist der (normale) Abstand der Lagerlöcher 42, 42' veränderbar, welcher wiederum den kleinsten Abstand der Reinigungsorganträger 16, 17 bestimmt. Je größer der (normale) Abstand der Lagerlöcher 42, 42' ist, desto kleiner ist der kleinste Abstand der Reinigungsorganträger 16, 17 zueinander.

Gleichzeitig mit der Einstellung des kleinsten Abstandes ist auch der Abstand der Reinigungsorganträger 16, 17 zueinander einstellbar, welcher sich ergibt, wenn die Reinigungsorganträger 16, 17 in ihren auflageleistenfernen Endstellungen angeordnet sind (größte Abstand). Je größer der (normale) Abstand der Lagerlöcher 42, 42' ist, desto kleiner ist auch der größte Abstand der Reinigungsorganträger 16, 17 zueinander.

Vorzugsweise kann der Auflageleisten-Reiniger 1 an seinem Gehäuse 9 ein Bedienelement zum Verstellen wenigstens einer Anschlagschraube 44, 44' aufweisen, so dass zumindest eine Feineinstellung des kleinsten und auch des größten Abstandes der Reinigungsorganträger 16, 17 zueinander ohne Öffnen des Gehäuses 9 erfolgen kann.

Sollten die Reinigungszähne 20 eines der Reinigungsorganträger 16, 17 zeitlich vor den Reinigungszähnen 20 des anderen Reinigungsorganträgers 16, 17 auf ein Hindernis treffen, schwenken die Lagerplatten 36, 36' gemeinsam mit einer gleichgerichteten Ausgleichschwenkbewegung um die Drehachsen 33, 33'.

Da die Reinigungsorganträger 16, 17 zumindest kurzzeitig immer wieder in die auflageleistenfernen Endstellungen überführt werden, kann der Auflageleisten-Reiniger 1 zudem viele Hindernisse an der Auflageleiste 1 ohne dauerhaftes Blockieren der Vorschubbewegung passieren.

Ein Blockieren der Vorschubbewegung des Auflageleisten-Reinigers 1 durch abruptes Anstoßen an Hindernisse wird bei dem Auflageleisten-Reiniger 1 zudem dadurch reduziert, dass die Schneidkanten 50 der Reinigungszähne 20 bogenförmig ausbildet sind. Wenn die bogenförmigen Schneidkanten 50 in Vorschubrichtung 15 auf ein Hindernis treffen, können die Reinigungsorganträger 16, 17 mittels der Vorschubkraft und unter Verformung der Stabfeder 45 auseinander gedrückt werden.

Des Weiteren weist der Antrieb 21 des Auflageleisten-Reinigers 1 nicht gezeigte Steuerungsmittel auf, mittels derer eine Stoppstellung des Antriebs 21 definierbar ist. Insbesondere ist als Stoppstellung diejenige Stellung des Antriebs 21 definiert, in welcher die Reinigungsorganträger 16, 17 quer zu den Seitenlängsflächen 6, 7 ihre auflageleistenfernen Endstellungen einnehmen. Beim Abschalten des Antriebs 21 werden die Antriebswellen 30, 30' zunächst automatisch in die der definierten Stoppstellung entsprechenden Drehstellungen gedreht und anschließend der Antrieb 21 erst vollends abgeschaltet. In der Stoppstellung ist der Abstand zwischen den Reinigungsorganträger 16, 17 am größten. Daher kann der Auflageleisten-Reiniger 1, wenn der Antrieb 21 die Stoppstellung einnimmt, besonders leicht entlang einer Auflageleiste 2 positioniert werden oder auf eine andere Auflageleiste 2 umgesetzt werden.

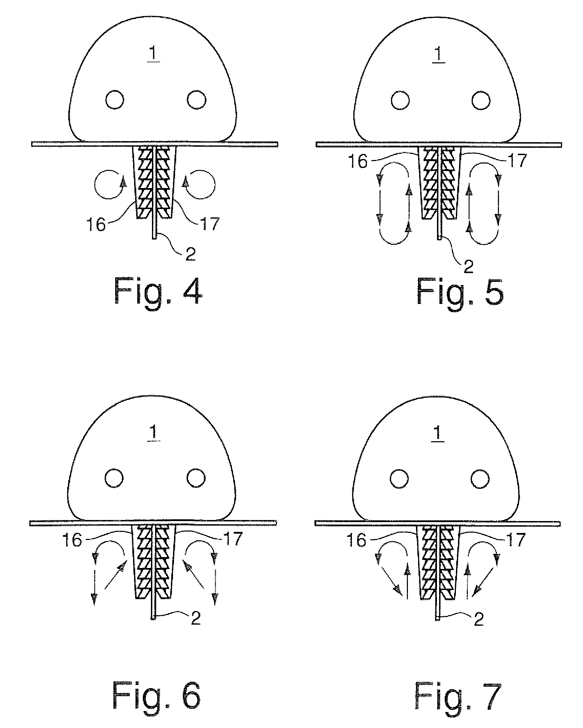

Die Figuren 4 bis 8 zeigen alternative Ausführungsbeispiele von Auflageleisten-Reinigern 1, welche sich von dem vorstehend beschrieben Auflageleisten-Reiniger 1 durch die Bewegungsbahnen unterscheiden, auf denen die Reinigungsorganträger 16, 17 relativ zur Auflageleiste 2 gesteuert bewegt werden können. Der Antrieb der gezeigten alternativen Ausführungsbeispiele weist entsprechende Antriebsmittel auf.

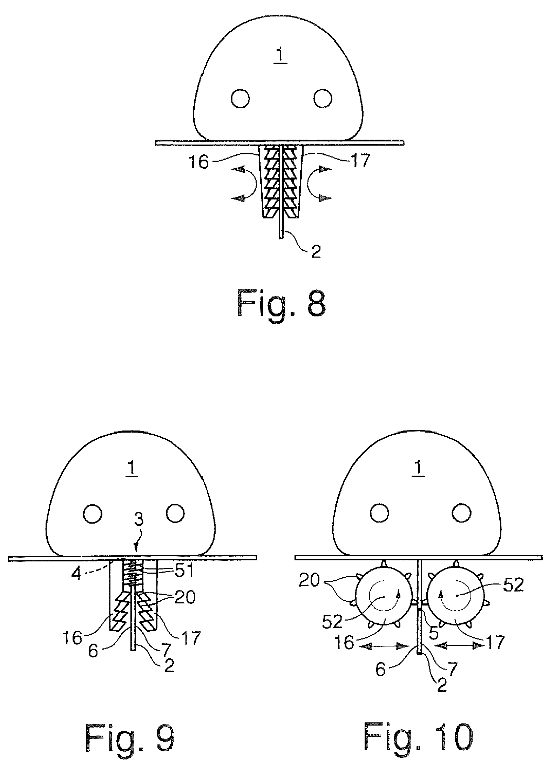

Während bei den Varianten gemäß den Figuren 4 bis 7 die Reinigungsorganträger 16, 17 umlaufend aufgeschlossenen Bewegungsbahnen bewegt werden, zeigt Figur 8 eine Variante mit einer oszillierenden Relativbewegung.

Die in den Figuren 1 bis 8 gezeigte Ausgestaltung der Reinigungsorgane stellt nur eine beispielhafte Variante dar. Alternativ oder ergänzend können als Reinigungsorgane auch Borsten, Reibflächen usw. dienen.

Beispielhaft zeigt Figur 9 eine Variante eines Auflageleisten-Reinigers 1, welcher Grobreinigungsorgane in Form von Reinigungszähnen 20 und Feinreinigungsorgane in Form von Borsten 51 aufweist. Gemäß Figur 9 sind die Reinigungsorganträger 16, 17 quer zu den Seitenlängsflächen 6, 7 in ihren auflageleistennahen Endstellungen angeordnet. Die Reinigungszähne 20 sind auf den Reinigungsorganträgern 16, 17 so angeordnet, dass der Abstand zwischen gegenüberliegend angeordneten Reinigungszähnen 20 in der gezeigten Stellung zur Oberseite 3 der Auflageleiste 2 hin abnimmt. Die sich auf diese Weise ergebende keilartige Anordnung der Reinigungszähne 20 trägt der Anforderung Rechnung, dass die Auflageleiste 2 vor allem im Bereich ihrer Oberseite 3 besonders gut gereinigt werden muss.

Außerdem weisen die Reinigungsorganträger 16, 17 als Borsten 51 ausgebildete Reinigungsorgane auf, welche durch die Quer-Bewegung der Reinigungsorganträger 16, 17 quer zu den Seitenlängsflächen 6, 7 über die Oberseite 3 der Auflageleiste 2 hinweg, insbesondere zwischen den Auflagezacken 4 hindurch, geführt werden können, um Ablagerungen 8 von der Auflageleiste 2 zu entfernen.

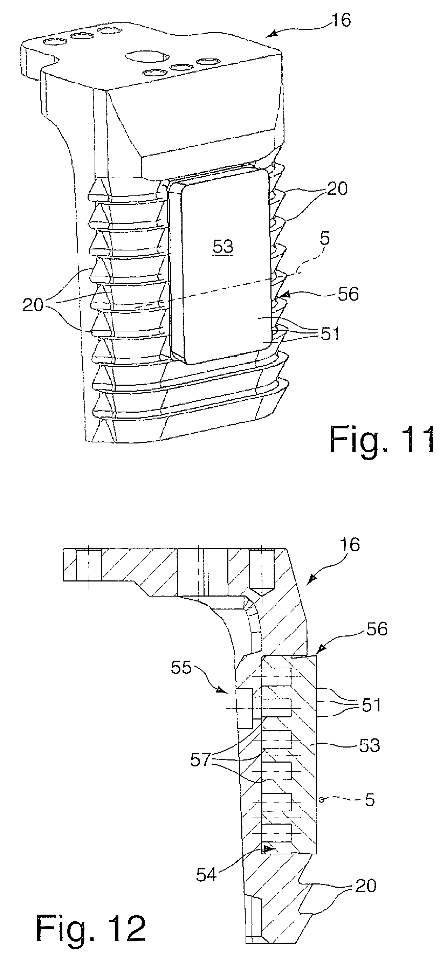

Figur 11 ist eine weitere Variante eines Reinigungsorganträgers 16 zu entnehmen, welcher an dem Auflageleisten-Reiniger 1 zusammen mit einem zweiten Reinigungsorganträger gleicher Bauart eingesetzt werden kann.

Der Reinigungsorganträger 16 weist ebenfalls Grobreinigungsorgane in Form von Reinigungszähnen 20 und Feinreinigungsorgane in Form von Borsten 51 (nicht im Einzelnen dargestellt) auf. Die Borsten 51 bilden ein Borstenfeld 53. Insgesamt ist der in Figur 11 gezeigte Reinigungsorganträger 16 breiter als z. B. der in Figur 3 gezeigte Reinigungsorganträger 16 ausgebildet.

In Figur 11 ist der Verlauf der Längsachse 5 der Auflageleiste 2 beim Reinigen der Auflageleiste 2 mit einem Auflageleisten-Reiniger 1 angedeutet, welcher mit zumindest einem in Figur 11 gezeigten Reinigungsorganträger 16 ausgestattet ist. Der Reinigungsorganträger 16 zeichnet sich durch eine besondere Reinigungswirkung aus, da insbesondere in demjenigen Abschnitt des Reinigungsorganträgers 16, welcher dem oberen Abschnitt der Auflageleiste 2 zugeordnet ist, die Borsten 51 (Feinreinigungsorgane) zumindest in einer Richtung entlang der Längsachse 5 auf die Reinigungszähne 20 (Grobreinigungsorgane) folgen, so dass zuerst eine Grobreinigung und darauffolgend eine Feinreinigung der Auflageleiste 2 mittels der Reinigungsorgane an ein und demselben Reinigungsorganträger 16 möglich ist.

Außerdem ist der Reinigungsorganträger 16 derart ausgebildet, dass der Auflageleisten-Reiniger 1 und die Auflageleiste 2 beim Reinigen in beiden Richtungen entlang der Längsachse 5 relativ zueinander bewegt werden können, wobei die Reinigungswirkung in beiden Richtungen aber gleichermaßen gut ist. Dies ergibt sich dadurch, dass die Borsten 51 - zumindest im oberen Abschnitt des Reinigungsorganträgers 16 - entlang der in Figur 11 angedeuteten Längsachse 5 zwischen den Reinigungszähnen 20 angeordnet ist. Jeweils an den Seitenrändern ist der Reinigungsorganträger mit einer Reinigungszahnreihe versehen. Zwischen den Reinigungszahnreihen ist das Borstenfeld 53 angeordnet. Eine Reinigungszahnreihe ist unterhalb des Borstenfeldes 53 vorgesehen. Insbesondere sind die Reinigungsorgane symmetrisch an dem Reinigungsorganträger 16 angeordnet.

Aus Figur 12, welche eine Schnittdarstellung des Reinigungsorganträgers 16 zeigt, ist ersichtlich, dass das durch die Borsten 51 gebildete Borstenfeld 53 an einem plattenartigen Borstenträger 54 befestigt ist, welcher mit dem Reinigungsorganträger 16 durch eine Schraubverbindung 55 lösbar verbunden ist. Die Befestigungsschraube ist in Figur 12 nicht dargestellt. Der Borstenträger 54 und das Borstenfeld 53 bilden einen Bürsteneinsatz 56, welcher dank der lösbaren Verbindung zwischen dem Reinigungsorganträger 16 und dem Bürsteneinsatz 56 in einfacher Weise ausgewechselt werden kann. Dies ist vor allem deshalb vorteilhaft, weil die Borsten 51 in der Regel schneller verschleißen als die Reinigungszähne 20 und somit früher als die Reinigungszähne 20 ersetzt werden müssen.

Der Borstenträger 54 weist mehrere Gewindebohrungen 57 zur Aufnahme einer Befestigungsschraube auf, so dass er an unterschiedlichen Bauarten von Reinigungsorganträgern 16 befestigt werden kann.

Schließlich zeigt Figur 10 eine Variante eines Auflageleisten-Reinigers 1, welcher walzenartige Reinigungsorganträger 16, 17 aufweist, die mittels eines Antriebs um parallel zur Längsachse 5 der Auflageleiste 2 verlaufende Drehachsen 52 drehbar sind und zusätzlich mittels eines Antriebs quer zu den Seitenlängsflächen 6, 7 periodisch verschiebbar bzw. schwenkbar sind.

## Patentansprüche

1. Maschineller Auflageleisten-Reiniger (1) zum Reinigen von Auflageleisten (2) von Werkstückauflagen an Werkzeugmaschinen, insbesondere an Werkzeugmaschinen zum thermischen Schneiden von Werkstücken,
• mit einem Reinigungsorganträger (16, 17), an welchem wenigstens ein Reinigungsorgan (20) vorgesehen ist und welchem bei der Reinigung einer Auflageleiste (2) eine Seitenlängsfläche der Auflageleiste (2) zugeordnet ist und
• mit einem Parallel-Antrieb, welcher derart ausgebildet ist, dass er bei der Reinigung der Auflageleiste (2), um mittels des Reinigungsorgans (20) Ablagerungen (8) von der Auflageleiste (2) zu entfernen, das Reinigungsorgan (20) und die Auflageleiste (2) relativ zueinander in einer Bewegungsrichtung bewegt, die bei der Reinigung der Auflageleiste (2) parallel zu der dem Reinigungsorganträger (16, 17) zugeordneten Seitenlängsfläche (6, 7) der Auflageleiste (2) und dabei quer zu einer Achse verläuft, die sich bei der Reinigung der Auflageleiste (2) längs der Längsachse (5) der Auflageleiste (2) erstreckt, wobei der Auflageleisten-Reiniger (1) einen Quer-Antrieb aufweiset, welcher derart ausgebildet ist, dass er bei der Reinigung der Auflageleiste (2) den Reinigungsorganträger (16, 17) und die Auflageleiste (2) relativ zueinander in einer zweiten Bewegungsrichtung periodisch aufeinander zu und voneinander weg bewegt, wobei die zweite Bewegungsrichtung bei der Reinigung der Auflageleiste (2) quer zu der dem Reinigungsorganträger (16, 17) zugeordneten Seitenlängsfläche (6, 7) der Auflageleiste (2) verläuft.

2. Maschineller Auflageleisten-Reiniger nach Anspruch 1, **dadurch gekennzeichnet, dass** der Parallel-Antrieb derart ausgebildet ist, dass er J Z den Reinigungsorganträger (16, 17) und die Auflageleiste (2) mit einer periodischen Hubbewegung relativ zueinander bewegt.

3. Maschineller Auflageleisten-Reiniger nach einem der vorhergehenden Ansprüche, **dadurch gekennzeichnet, dass** der Parallel-Antrieb und der Quer-Antrieb derart ausgebildet sind, dass sie den Reinigungsorganträger (16, 17) und die Auflageleiste (2) derart relativ zueinander bewegen, dass sich die durch den Parallel-Antrieb und den Quer-Antrieb erzeugten Relativbewegungen miteinander überlagern.

4. Maschineller Auflageleisten-Reiniger nach einem der vorhergehenden Ansprüche, **dadurch gekennzeichnet, dass** der Parallel-Antrieb und der Quer-Antrieb derart ausgebildet sind, dass sie den Reinigungsorganträger (16, 17) periodisch entlang einer geschlossenen Bewegungsbahn relativ zu der Auflageleiste (2) gesteuert bewegen.

5. Maschineller Auflageleisten-Reiniger nach einem der vorhergehenden Ansprüche, **dadurch gekennzeichnet, dass** der Parallel-Antrieb und der Quer-Antrieb einen gemeinsamen Antriebsmotor (10) aufweisen.

6. Maschineller Auflageleisten-Reiniger nach einem der vorhergehenden Ansprüche, **dadurch gekennzeichnet, dass** der Parallel-Antrieb und/oder der Quer-Antrieb derart ausgebildet ist, bzw. sind, dass er, bzw. sie, den Reinigungsorganträger (16, 17) relativ zu der Auflageleiste (2) bewegt bzw. bewegen.

7. Maschineller Auflageleisten-Reiniger nach einem der vorhergehenden Ansprüche, **dadurch gekennzeichnet, dass** der Reinigungsorganträger (16, 17) oder die Auflageleiste (2) über eine Steuerungsscheibe, insbesondere einen Exzenter (34, 34'), mit einem gemeinsamen Antriebsmotor (10) des Parallel-Antriebs und des Quer-Antriebs bewegungsverbunden ist.

8. Maschineller Auflageleisten-Reiniger nach einem der vorhergehenden Ansprüche, **dadurch gekennzeichnet, dass** eine kraftgesteuerte Hubbegrenzungseinrichtung (48) für die bei der Reinigung der Auflageleiste (2) ausgeführte Relativbewegung von Reinigungsorganträger (16, 17) und Auflageleiste (2) quer zur Seitenlängsfläche (6, 7) der Auflageleiste (2) aufeinander zu vorgesehen ist.

9. Maschineller Auflageleisten-Reiniger nach einem der vorhergehenden Ansprüche, **dadurch gekennzeichnet, dass** zwei Reinigungsorganträger (16, 17) vorgesehen sind, zwischen denen bei der Reinigung der Auflageleiste (2) die Auflageleiste (2) zum Entfernen der Ablagerungen (8) angeordnet ist.

10. Maschineller Auflageleisten-Reiniger nach Anspruch 8, **dadurch gekennzeichnet, dass** die Reinigungsorganträger (16, 17) derart ausgebildet sind, dass sie sich bei der Reinigung der Auflageleiste (2) synchron aufeinander zu und voneinander weg bewegen, so dass sich die Reinigungsorganträger (16, 17) synchron auf die ihnen jeweils zugeordnete Seitenlängsfläche (6, 7) der Auflageleiste (2) zu und von dieser weg bewegen.

11. Maschineller Auflageleisten-Reiniger nach Anspruch 8 und 9, **dadurch gekennzeichnet, dass** ein gemeinsamer Quer-Antrieb und/oder ein gemeinsamer Parallel-Antrieb derart ausgebildet ist, bzw. sind, dass er, bzw. sie, die Reinigungsorganträger (16, 17) relativ zu der Auflageleiste (2) bewegt, bzw. bewegen.

12. Maschineller Auflageleisten-Reiniger nach einem der vorhergehenden Ansprüche, **dadurch gekennzeichnet, dass** als Reinigungsorgan ein Reinigungszahn (20) vorgesehen ist, dessen Schneidkante (50) vorzugsweise bogenförmig verläuft.

13. Maschineller Auflageleisten-Reiniger nach einem der vorhergehenden Ansprüche, **dadurch gekennzeichnet, dass** an ein und demselben Reinigungsorganträger (16, 17) Grobreinigungsorgane, beispielsweise Reinigungszähne (20), und Feinreinigungsorgane, beispielsweise Borsten (51), vorgesehen sind.

14. Maschineller Auflageleisten-Reiniger nach Anspruch 13, **dadurch gekennzeichnet, dass** die Feinreinigungsorgane zumindest abschnittsweise entlang der Längsachse (5) der Auflageleiste (2) zwischen Grobreinigungsorganen angeordnet sind.

15. Maschineller Auflageleisten-Reiniger nach einem der vorhergehenden Ansprüche, **dadurch gekennzeichnet, dass** an zumindest einem Reinigungsorganträger (16) ein auswechselbarer Reinigungsorgan-Einsatz vorgesehen ist.

## Claims

1. Mechanical support bar cleaner (1) for cleaning support bars (2) of workpiece supports on machine tools, in particular on machine tools for thermally cutting workpieces,
• having a cleaning member carrier (16, 17) on which at least one cleaning member (20) is provided and with which there is associated a lateral longitudinal face of the support bar (2) when a support bar (2) is cleaned, and
• having a parallel drive which is constructed in such a manner that, when the support bar (2) is cleaned, in order to remove deposits (8) from the support bar (2) using the cleaning member (20), it moves the cleaning member (20) and the support bar (2) relative to each other in a.movement direction which, when the support bar (2) is cleaned, extends parallel with the lateral longitudinal face (6, 7) of the support bar (2) associated with the cleaning member carrier (16, 17) and transversely relative to an axis which, when the support bar (2) is cleaned, extends along the longitudinal axis (5) of the support bar (2), wherein the support bar cleaner (1) has a transverse drive which is constructed in such a manner that, when the support bar (2) is cleaned, it moves the cleaning member carrier (16, 17) and the support bar (2) relative to each other in a second movement direction periodically towards each other and away from each other, wherein the second movement direction, when the support bar (2) is cleaned, extends transversely relative to the lateral longitudinal face (6, 7) of the support bar (2) associated with the cleaning member carrier (16, 17).

2. Mechanical support bar cleaner according to claim 1, **characterised in that** the parallel drive is constructed in such a manner that it moves the cleaning member carrier (16, 17) and the support bar (2) relative to each other with a periodic lifting movement.

3. Mechanical support bar cleaner according to either of the preceding claims, **characterised in that** the parallel drive and the transverse drive are constructed in such a manner that they move the cleaning member carrier (16, 17) and the support bar (2) relative to each other in such a manner that the relative movements produced by the parallel drive and the transverse drive are superimposed.

4. Mechanical support bar cleaner according to any one of the preceding claims, **characterised in that** the parallel drive and the transverse drive are constructed in such a manner that they move the cleaning member carrier (16, 17) periodically along a closed movement path relative to the support bar (2) in a controlled manner.

5. Mechanical support bar cleaner according to any one of the preceding claims, **characterised in that** the parallel drive and the transverse drive have a common drive motor (10).

6. Mechanical support bar cleaner according to any one of the preceding claims, **characterised in that** the parallel drive and/or the transverse drive is/are constructed in such a manner that it/they move(s) the cleaning member carrier (16, 17) relative to the support bar (2).

7. Mechanical support bar cleaner according to any one of the preceding claims, **characterised in that** the cleaning member carrier (16, 17) or the support bar (2) is movingly connected by means of a control disc, in particular a cam (34, 34'), to a common drive motor (10) of the parallel drive and the transverse drive.

8. Mechanical support bar cleaner according to any one of the preceding claims, **characterised in that** there is provided a force-controlled travel limitation device (48) for the relative movement which is carried out when the support bar (2) is cleaned by the cleaning member carrier (16, 17) and the support bar (2) towards each other transversely relative to the lateral longitudinal face (6, 7) of the support bar (2).

9. Mechanical support bar cleaner according to any one of the preceding claims, **characterised in that** there are provided two cleaning member carriers (16, 17) between which the support bar (2) is arranged to remove the deposits (8) when the support bar (2) is cleaned.

10. Mechanical support bar cleaner according to claim 8, **characterised in that** the cleaning member carriers (16, 17) are constructed in such a manner that they move synchronously towards each other and away from each other when the support bar (2) is cleaned so that the cleaning member carriers (16, 17) move in a synchronous manner towards and away from the lateral longitudinal face (6, 7) of the support bar (2) associated therewith, respectively.

11. Mechanical support bar cleaner according to claim 8 and claim 9, **characterised in that** a common transverse drive and/or a common parallel drive is/are constructed in such a manner that it/they move(s) the cleaning member carriers (16, 17) relative to the support bar (2).

12. Mechanical support bar cleaner according to any one of the preceding claims, **characterised in that** there is provided as a cleaning member a cleaning tooth (20) whose cutting edge (50) preferably extends in a curved manner.

13. Mechanical support bar cleaner according to any one of the preceding claims, **characterised in that** rough cleaning members, for example, cleaning teeth (20), and fine cleaning members, for example, bristles (51), are provided on one and the same cleaning member carrier (16, 17).

14. Mechanical support bar cleaner according to claim 13, **characterised in that** the fine cleaning members are arranged at least partially along the longitudinal axis (5) of the support bar (2) between rough cleaning members.

15. Mechanical support bar cleaner according to any one of the preceding claims, **characterised in that** a replaceable cleaning member insert is provided on at least one cleaning member carrier (16).

## Revendications

1. Nettoyeur mécanique (1) dévolu au nettoyage de platines de soutien (2) de supports de pièces équipant des machines-outils, en particulier des machines-outils dédiées au découpage thermique de pièces, comprenant
• un support (16, 17) d'organes de nettoyage, sur lequel est prévu au moins un organe de nettoyage (20) et auquel une face longitudinale latérale d'une platine de soutien (2) est associée au cours du nettoyage de ladite platine de soutien (2), et
• un entraînement parallèle réalisé de façon telle que, lors du nettoyage de la platine de soutien (2) visant à éliminer des dépôts (8) sur ladite platine de soutien (2), au moyen de l'organe de nettoyage (20), il imprime des mouvements relatifs audit organe de nettoyage (20) et à ladite platine de soutien (2) dans une direction de mouvement qui, au cours dudit nettoyage de la platine de soutien (2), s'étend parallèlement à la face longitudinale latérale (6, 7) de ladite platine de soutien (2) qui est associée au support (16, 17) d'organes de nettoyage, et transversalement par rapport à un axe qui s'étend le long l'axe longitudinal (5) de ladite platine de soutien (2) au cours dudit nettoyage de ladite platine de soutien (2), sachant que
ledit nettoyeur (1) de platines de soutien présente un entraînement transversal réalisé de telle sorte que, lors du nettoyage de la platine de soutien (2), il imprime périodiquement au support (16, 17) d'organes de nettoyage et à ladite platine de soutien (2), dans une seconde direction de mouvement, des mouvements relatifs les rapprochant et les éloignant l'un de l'autre, ladite seconde direction de mouvement s'étendant, au cours du nettoyage de ladite platine de soutien (2), transversalement par rapport à la face longitudinale latérale (6, 7) de ladite platine de soutien (2) qui est associée audit support (16, 17) d'organes de nettoyage.

2. Nettoyeur mécanique de platines de soutien, selon la revendication 1, **caractérisé par le fait que** l'entraînement parallèle est réalisé de manière à imprimer un mouvement relatif périodique de levage au support (16, 17) d'organes de nettoyage et à la platine de soutien (2).

3. Nettoyeur mécanique de platines de soutien, selon l'une des revendications précédentes, **caractérisé par le fait que** l'entraînement parallèle et l'entraînement transversal sont réalisés de manière à imprimer, au support (16, 17) d'organes de nettoyage et à la platine de soutien (2), des mouvements relatifs tels que lesdits mouvements relatifs, engendrés par ledit entraînement parallèle et par ledit entraînement transversal, se superposent.

4. Nettoyeur mécanique de platines de soutien, selon l'une des revendications précédentes, **caractérisé par le fait que** l'entraînement parallèle et l'entraînement transversal sont réalisés de manière à imprimer périodiquement au support (16, 17) d'organes de nettoyage, par rapport à la platine de soutien (2), des mouvements commandés le long d'un trajet de mouvement fermé.

5. Nettoyeur mécanique de platines de soutien, selon l'une des revendications précédentes, **caractérisé par le fait que** l'entraînement parallèle et l'entraînement transversal présentent un moteur d'entraînement (10) commun.

6. Nettoyeur mécanique de platines de soutien, selon l'une des revendications précédentes, **caractérisé par le fait que** l'entraînement parallèle, et/ou l'entraînement transversal, est (sont) réalisé(s) de telle sorte qu'il(s) imprime(nt) des mouvements, au support (16, 17) d'organes de nettoyage, par rapport à la platine de soutien (2).

7. Nettoyeur mécanique de platines de soutien, selon l'une des revendications précédentes, **caractérisé par le fait que** le support (16, 17) d'organes de nettoyage ou la platine de soutien (2) est en liaison motrice, par l'intermédiaire d'un disque de commande et notamment d'un excentrique (34, 34'), avec un moteur commun d'entraînement (10) de l'entraînement parallèle et de l'entraînement transversal.

8. Nettoyeur mécanique de platines de soutien, selon l'une des revendications précédentes, **caractérisé par le fait qu'**un dispositif (48) à commande assistée est prévu pour limiter la course du mouvement relatif que le support (16, 17) d'organes de nettoyage, et la platine de soutien (2), effectuent en direction l'un de l'autre au cours du nettoyage de ladite platine de soutien (2), transversalement par rapport à la face longitudinale latérale (6, 7) de ladite platine de soutien (2).

9. Nettoyeur mécanique de platines de soutien, selon l'une des revendications précédentes, **caractérisé par** la présence de deux supports (16, 17) d'organes de nettoyage entre lesquels la platine de soutien (2) est placée, au cours du nettoyage de ladite platine de soutien (2), en vue de l'élimination des dépôts (8).

10. Nettoyeur mécanique de platines de soutien, selon la revendication 8, **caractérisé par le fait que** les supports (16, 17) d'organes de nettoyage sont réalisés de façon telle qu'ils se meuvent en direction et à l'écart l'un de l'autre de manière synchrone, au cours du nettoyage de la platine de soutien (2), de sorte que lesdits supports (16, 17) d'organes de nettoyage se rapprochent et s'éloignent, en synchronisme, de la face longitudinale latérale (6, 7) de ladite platine de soutien (2) qui leur est respectivement associée.

11. Nettoyeur mécanique de platines de soutien, selon les revendications 8 et 9, **caractérisé par le fait qu'**un entraînement transversal commun, et/ou un entraînement parallèle commun, est (sont) réalisé(s) de telle sorte qu'il(s) imprime(nt) des mouvements, aux supports (16, 17) d'organes de nettoyage, par rapport à la platine de soutien (2).

12. Nettoyeur mécanique de platines de soutien, selon l'une des revendications précédentes, **caractérisé par le fait qu'**une dent de nettoyage (20), dont l'arête tranchante (50) s'étend de préférence en arc de cercle, est prévue en tant qu'organe de nettoyage.

13. Nettoyeur mécanique de platines de soutien, selon l'une des revendications précédentes, **caractérisé par le fait que** des organes de nettoyage grossier, par exemple des dents de nettoyage (20), et des organes de nettoyage fin, des brosses (51) par exemple, sont prévus sur un seul et même support (16, 17) d'organes de nettoyage.

14. Nettoyeur mécanique de platines de soutien, selon la revendication 13, **caractérisé par le fait que** les organes de nettoyage fin sont interposés entre des organes de nettoyage grossier, au moins par zones, le long de l'axe longitudinal (5) de la platine de soutien (2).

15. Nettoyeur mécanique de platines de soutien, selon l'une des revendications précédentes, **caractérisé par le fait qu'**un insert remplaçable, constitué par des organes de nettoyage, est prévu sur au moins un support (16) d'organes de nettoyage.
